# EUROPÄISCHE PATENTANMELDUNG

(11) **EP 1 991 027 A2**
(43) Veröffentlichungstag der Anmeldung: **12.11.2008**
(21) Anmeldenummer: 08102477.0
(22) Anmeldetag: 11.03.2008
(51) Int. Cl.: H04Q 9/00

(54) **Sensorvorrichtung, elektrisches Modul, Steuergerät sowie Gesamtsystem**

(30) Priorität: 11.05.2007 DE 102007022188
(71) Anmelder: Robert Bosch GmbH, 70442 Stuttgart (DE)
(72) Erfinder: Schmucker, Clemens, 71732, Tamm (DE); Bremmer, Marcus, 71726, Benningen Am Neckar (DE)

(57) **Zusammenfassung**

Die Erfindung betrifft eine Sensorvorrichtung mit einem Sensor (1) und mit einem berührungslos auslesbaren Element (2), das permanent an dem Sensor (1) befestigt ist, wobei das berührungslos auslesbare Element (2) ausgebildet ist, so dass ein sensorspezifischer Parameter des Sensors auslesbar ist. Die Erfindung betrifft weiterhin ein Verfahren zum Abgleichen eines Steuergeräts (11) zu einem elektrischen Modul (10), das mindestens eine Sensorvorrichtung mit einem Sensor (1) und einem permanent an dem Sensor befestigten berührungslos auslesbaren Element (2) umfasst. Das Verfahren umfasst die Schritte des Auslesens des berührungslos auslesbaren Elementes (2) mit Hilfe eines Steuergeräts (11), um in dem Steuergerät (11) einen sensorspezifischen Parameter des Sensors zu erhalten, und des Abgleichens des Steuergeräts (11) abhängig von den ausgelesenen sensorspezifischen Parametern.

## Beschreibung

### Technisches Gebiet

Die Erfindung betrifft eine Sensorvorrichtung, ein elektrisches Modul mit einer Sensorvorrichtung, ein Steuergerät, sowie ein Gesamtsystem mit einem elektrischen Modul und einem Steuergerät. Die Erfindung betrifft weiterhin ein Verfahren zum Abgleichen eines Steuergeräts auf ein elektrisches Modul zum Aufbau eines Gesamtsystems.

### Stand der Technik

In elektrischen Modulen werden häufig Sensoren eingesetzt, um interne Größen zu erfassen. Die internen Größen werden von externen Steuergeräten, die über Verbindungsleitungen an die eingebauten Sensoren angeschlossen sind, erfasst und das elektrische Modul in vorgesehener Weise gesteuert.

Z.B. werden bei Hochvoltbatteriesystemen für Hybridfahrzeuge Steuergeräte für das Batteriemanagement eingesetzt, die den Zustand der Batterie überwachen und Maßnahmen zur Erhöhung der Batterielebenszeit durchführen. Zu diesem Zweck misst das Steuergerät je nach Ausführungsvariante eine oder mehrere Einzelzellenspannungen, eine oder mehrere Zellentemperaturen sowie den Strom, der durch die Batteriezellen fließt. Zur Strommessung werden entweder Shunts (geeichte Messwiderstände) oder induktive Stromsensoren verwendet.

Bei der Herstellung werden jedoch in der Regel Sensoren eines bestimmten Typs an einer dafür vorgesehenen Position in dem elektrischen Modul verbaut, ohne dass zuvor eine Parameterbestimmung eines bestimmten Sensors und dessen Zuordnung zu dem elektrischen Modul durchgeführt wird. Solange die durch die Spezifikation des Sensors vorgegebenen Parameter für das Einsatzgebiet in dem elektrischen Modul ausreichend ist, können bei einer Messung von internen Größen die durch die Spezifikation vorgegebenen Parameter verwendet werden. Je nach Anwendungsfall sind die Genauigkeitsanforderung an die Parameter der Sensoren jedoch größer als von der Spezifikation vorgegeben. Daher werden bislang häufig nach dem Einbau der entsprechenden Sensoren in das elektrische Modul deren Parameter genauer als von der Spezifikation des Sensors angegeben vermessen. Diese neu bestimmten Parameter werden zum Abgleichen eines Steuergeräts, das mit dem elektrischen Modul am Ende des Herstellungsprozesses zu einem Gesamtsystem verbunden werden soll, verwendet. Dabei können dann in dem Steuergerät die genauen Parameter jedes individuellen, in dem elektrischen Moduls eingesetzten Sensors berücksichtigt werden.

Im Fall des Hochvoltbatteriesystems müssen die Zellentemperaturen, die Zellenspannung sowie der fließende Strom sehr genau erfasst werden. Bei der Spannungsmessung ist ein Abgleichverfahren einfach durchzuführen, indem bei einer Band-Ende-Prüfung ein Soll-Ist-Spannungsvergleich durchgeführt wird und damit Korrekturwerte für das Steuergerät ermittelt werden können, die im Betrieb des Steuergeräts die Sensor- und Schaltungstoleranzen korrigieren. Bei einer Strommessung ist dies erheblich aufwändiger, da die entsprechenden Sensoren nicht Bestandteil des Steuergerätes sind, sondern separat gefertigt und in dem Batteriesystem eingebaut sind. Diese sind dann in der Regel von außen nicht mehr zugänglich. Ein Abgleich über die gesamte Messstrecke ist bei der Strommessung nur derart möglich, dass ein Soll-Strom eingeprägt wird und dann mit dem von dem Steuergerät über den entsprechenden Sensor erfassten Strom ein Korrekturwert ermittelt wird. Dieser Korrekturwert wird dann analog zu der Spannungsmessung im Betrieb zur Stromwertekorrektur in dem Steuergerät verwendet. Dieser Abgleichmechanismus erfordert jedoch eine Stromquelle, die in der Lage ist, die Soll-Ströme zu treiben, die in der Regel einige hundert Ampere betragen können. Daher ist eine solche Vorgehensweise für einen Abgleich aller Gesamtsysteme nach dem Ende des Herstellungsprozesses nicht praktikabel.

Ähnliches gilt für Temperaturmessungen. Temperatursensoren sind ebenfalls häufig im Gesamtsystem im Fall des Hochvoltbatteriesystems nahe der Batteriezellen angeordnet. Ein Abgleich ist ebenfalls sehr aufwändig, da die Soll-Wertvorgabe nur durch Temperaturschränke oder Temperaturtunnel erfolgen kann. Hinzu kommt, dass für die Ermittlung der Korrekturwerte eingeschwungene Temperaturzustände herrschen müssen. Dies bedeutet bei der Fertigung Wartezeiten, die das zu fertigende Produkt, das Gesamtsystem aus elektrischem Modul und Steuergerät, verteuern.

### Offenbarung der Erfindung

Es ist daher Aufgabe der vorliegenden Erfindung, eine Möglichkeit zur Verfügung zu stellen, um den Abgleich von Steuergeräten zu Sensoren in elektrischen Modulen bei Aufbau von Gesamtsystemen erheblich zu vereinfachen. Weiterhin ist es Aufgabe der vorliegenden Erfindung, zu ermöglichen, dass ein Steuergerät für ein elektrisches Modul in einfacher Weise ausgetauscht werden kann, wobei der Aufwand für das Abgleichen des Steuergeräts zu dem elektrischen Modul reduziert ist.

Diese Aufgabe wird durch die Sensorvorrichtung nach Anspruch 1, das elektrische Modul, das Steuergerät, das Gesamtsystem sowie durch das Verfahren zum Abgleichen eines Steuergeräts gemäß den nebengeordneten Ansprüchen gelöst.

Weitere vorteilhafte Ausgestaltungen der Erfindung sind in den abhängigen Ansprüchen angegeben.

Gemäß einem ersten Aspekt ist eine Sensorvorrichtung mit einem Sensor und mit einem berührungslos auslesbaren Element, das permanent an dem Sensor befestigt ist, vorgesehen. Das berührungslos auslesbare Element ist ausgebildet, so dass ein sensorspezifischer Parameter des Sensors auslesbar ist.

Eine derartige Sensorvorrichtung ermöglicht es, die genauen individuellen Parameter eines Sensors diesem so zuzuordnen, dass die Parameter jederzeit und in einfacher Weise erfasst werden können. So können die Parameter des Sensors selbst nach einem Einbau der Sensorvorrichtung in ein elektrisches Modul von außen erfasst werden, ohne in den Sensor nach der Montage einzugreifen.

Weiterhin kann das berührungslos auslesbare Element ausgebildet sein, so dass weiterhin eine Identifikationsnummer des Sensors auslesbar ist.

Gemäß einer Ausführungsform kann der Sensor ein Messwiderstand, einen Temperatursensor oder einen Induktivitäts-Strom-Sensor aufweisen. Das berührungslos auslesbare Element kann zumindest eines der folgenden Elemente aufweisen: ein RFID-Tag (RFID: Radio Frequency Identification), eine RFID-Karte, eine Funk-Sendeeinrichtung, eine optische Sendeeinrichtung, und eine optisch lesbare Codierung, wie z.B. einen 2D-Code.

Gemäß einem weiteren Aspekt ist ein elektrisches Modul mit einem oder mehreren eingebauten Sensorvorrichtungen vorgesehen. Dabei können der eine oder die mehreren Sensoren der Sensorvorrichtungen elektrisch von außen kontaktierbar sein, um mit Hilfe der entsprechenden Sensoren eine Messung vorzunehmen. Das berührungslos auslesbare Element jeder der entsprechenden Sensorvorrichtungen ist in einer Umgebung des elektrischen Moduls auslesbar.

Gemäß einem weiteren Aspekt ist ein Steuergerät zum Anschluss an ein derartiges elektrisches Modul vorgesehen, wobei das Steuergerät mit den Sensorvorrichtungen des elektrisches Moduls verbindbar ist, wobei das Steuergerät ausgebildet ist, um mit einer anschließbaren oder angeschlossenen Lesevorrichtung zum Auslesen der berührungslos auslesbaren Elemente der Sensorvorrichtungen jeweils den einen oder die mehreren sensorspezifischen Parameter jeder der Sensorvorrichtungen auszulesen und das Steuergerät abhängig von den ausgelesenen sensorspezifischen Parametern abzugleichen.

Weiterhin kann das Steuergerät ausgebildet sein, um das Abgleichen mit Hilfe von Korrekturwerten vorzunehmen, mit denen die von den Sensoren der Sensorvorrichtungen erfassten Messwerte beaufschlagt werden, wobei das Steuergerät ausgebildet ist, um den Korrekturwerte für den Messwert eines der Sensoren entsprechend dem zugeordneten sensorspezifischen Parameter zu berechnen.

Gemäß einer Ausführungsform kann das Steuergerät mit einer Schnittstelle zum Anschluss einer externen Lesevorrichtung zum Auslesen der berührungslos auslesbaren Elemente der Sensorvorrichtungen vorgesehen sein.

Gemäß einem weiteren Aspekt ist ein Gesamtsystem mit einem obigen elektrischen Modul und mit einem obigen Steuergerät vorgesehen.

Gemäß einem weiteren Aspekt ist ein Verfahren zum Abgleichen eines Steuergeräts zu einem elektrischen Modul, das mindestens eine Sensorvorrichtung mit einem Sensor und einem permanent an dem Sensor befestigten berührungslos auslesbaren Element umfasst, vorgesehen. Das Verfahren umfasst die Schritte des Auslesens des berührungslos auslesbaren Elementes mit Hilfe eines Steuergeräts, um in dem Steuergerät einen sensorspezifischen Parameter des Sensors zu erhalten, und des Abgleichens des Steuergeräts abhängig von den ausgelesenen sensorspezifischen Parametern.

### Kurzbeschreibung der Zeichnungen

Bevorzugte Ausführungsformen der Erfindung werden nachfolgend anhand der beigefügten Zeichnungen näher erläutert. Es zeigen:
Fig. 1 eine schematische Darstellung eines Sensors gemäß einer Ausführungsform der Erfindung;
Fig. 2 ein Gesamtsystem gemäß einer weiteren Ausführungsform der vorliegenden Erfindung.

### Beschreibung der Ausführungsformen

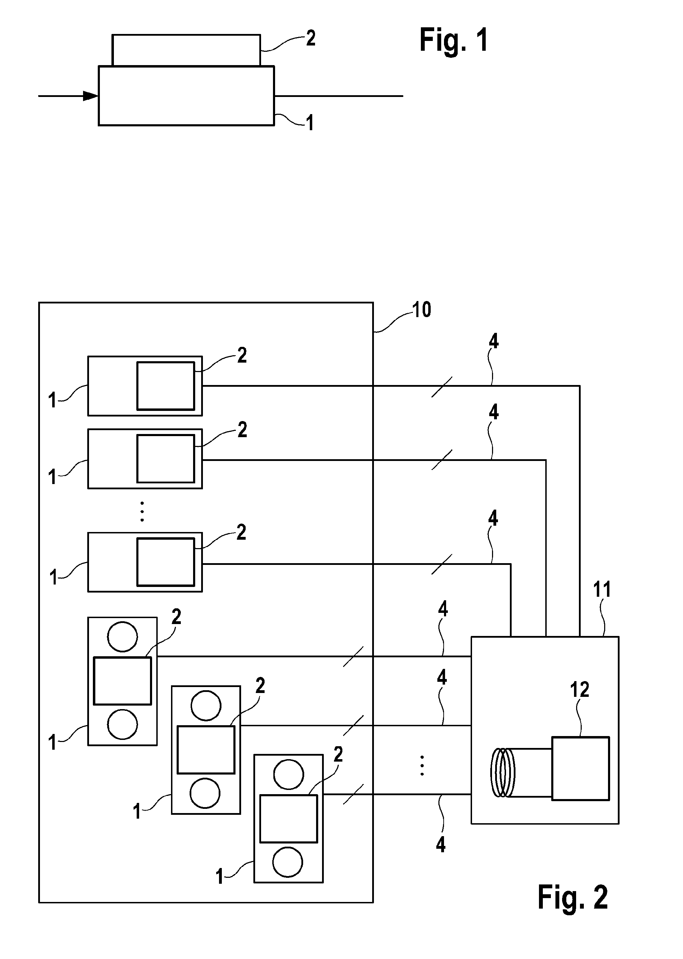

In Fig. 1 ist ein Sensor 1 z.B. in Form eines Shunts oder eines induktiven Kopplungselements vorgesehen, in dem z.B. eine Strommessung vorgenommen werden kann. Der Sensor kann Parameter aufweisen, die innerhalb eines von der Spezifikation des Sensors definierten Toleranzbereichs liegen. Diese Parameter beeinflussen eine Messung, die mithilfe eines solchen Sensors vorgenommen wird.

Wenn die Genauigkeitsanforderungen an den Sensor größer sind als es die durch die Spezifikation definierten Toleranzen der Parameter zulassen, müssen die Parameter des entsprechenden Sensors genauer bestimmt werden. Sind die Parameter bekannt, werden üblicherweise Steuergeräte, die mit solchen Sensoren verbunden sind, um abhängig von den über diese erfassten Messwerte eine Steuerung eines elektrischen Moduls vorzunehmen, mit Hilfe der bestimmten Parameter des Sensors abgeglichen. D.h., die von dem Steuergerät erfassten Messwerte werden z.B. mit einem Korrekturwert beaufschlagt, der die Abweichungen der Parameter des Sensors von dem Idealwert berücksichtigt.

Sind die Sensoren in dem elektrischen Modul verbaut, sind diese nur ihrem Typ nach bekannt und somit sind die Parameter der betreffenden Sensoren nur in der durch die Spezifikation vorgegebenen Genauigkeit bekannt. Ist es notwendig, das entsprechend mit dem elektrischen Modul zu verbindende Steuergerät mit genaueren Parametern abzugleichen, muss der dem entsprechenden elektrischen Modul zugeordnete Parameter erneut vermessen und genauer bestimmt werden.

Da ein Öffnen des elektrischen Moduls zum isolierten Vermessen des entsprechenden Sensors häufig aufgrund einer Gefährdung oder einer möglichen Zerstörung des elektrischen Moduls nicht möglich ist, ist es somit notwendig, die genauen für einen späteren Abgleich notwendigen Parameter des Sensors im Vorfeld zu erfassen und beim Zusammenbau des Gesamtsystems dem Steuergerät z.B. manuell zur Verfügung zu stellen. Dies erfordert derzeit eine Kenntnis darüber, welche individuellen, vorab genau vermessenen Sensoren in den entsprechenden elektrischen Modulen verbaut sind, um z.B. bei einem Austausch des Steuergerätes dieses mit den entsprechenden Parametern der darin verwendeten Sensoren erneut abzugleichen. Dies kann zu Fehlern führen und unter Umständen unmöglich sein, wenn die entsprechenden Informationen über die Parameter der Sensoren nicht mehr vorliegen.

Erfindungsgemäß wird nun vorgeschlagen, den Sensor 1 mit einem berührungslos auslesbaren Element 2 zu versehen, wie z.B. einem RFID-Transponder, in dem Sensorinformationen, wie z.B. die benötigten Parameter des Sensors 1 und eine Identifikationsinformation des Sensortyps gespeichert sind. Das auslesbare Element 2 ist berührungslos in der Umgebung des elektrischen Moduls auslesbar. Das auslesbare Element 2 kann als herkömmliche RFID-Einheit ausgebildet und mit einer Antenne und einem Codierungselement versehen sein, das mit der Antenne gekoppelt ist, um die Identifikationsinformation auszugeben.

Z.B. kann die Identifikationsinformation angeben, welcher Art der Sensor ist und/oder an welcher bestimmter Stelle er für den Einbau in dem elektrischen Modul vorgesehen ist. Die darin gespeicherten Parameter sind individuell sensorabhängig und können beispielsweise bei Verwendung eines Shunts (Messwiderstandes) als Sensor der genaue elektrische Widerstand, bei Verwendung eines induktiven Sensors für die Strommessung einer oder mehrere Übertragungsparameter, bei Verwendung eines Temperatursensors Parameter zur Beschreibung einer Temperatur-Widerstands-Kennlinie und dgl. sein. Allgemein bezeichnet der Begriff Parameter hierin eine Größe, die ein elektrisches Verhalten des Sensors mit Bezug zur Messgröße beschreibt.

In Fig. 2 ist ein Gesamtsystem mit einem elektrischen Modul 10 und einem Steuergerät 11 dargestellt. Das elektrische Modul 10 enthält mehrere Sensoren 1, die jeweils mit einem RFID-Transponder 2 versehen sind. Das Steuergerät 11 umfasst einen RFID-Leser 12 zum Detektieren des in dem elektrischen Modul 10 enthaltenen RFID-Transponders 2. Das Steuergerät 11 ist über elektrische Verbindungsleitungen 4 mit jedem der in dem elektrischen Modul 10 vorgesehenen Sensoren 1 verbunden. Die einzelnen Verbindungsleitungen 4 dienen der Übertragung des von dem Sensor 1 erfassten Messwerts an das Steuergerät 11. Weiterhin definieren die einzelnen Verbindungsleitungen 4 zwischen dem Steuergerät 11 und dem elektrischen Modul 10 durch deren Zuordnung die Position und die Funktion des entsprechenden Sensors 1 mit Bezug auf das Steuergerät 11 eindeutig entsprechend der Bauweise des Gesamtsystems. Der durch die in einem entsprechenden RFID-Transponder 2 gespeicherte Identifikationsnummer markierte Sensor kann somit eindeutig einer entsprechende Position in dem elektrischen Modul 10 zugeordnet werden.

Bei dem Aufbau des Gesamtsystems erfasst das Steuergerät 11 mithilfe des RFID-Lesers 12 den in dem elektrischen Modul enthaltenen RFID-Transponder 2 und liest deren Identifikationsnummer und die zugeordneten Parameter aus. Anhand der Parameter werden in bekannter Weise Korrekturwerte ermittelt, mit denen die an dem entsprechenden Sensor gemessenen Größen beaufschlagt werden, um das Steuergerät 11 auf das elektrische Modul 10 abzugleichen. Die Korrekturwerte können vorzugsweise permanent in dem Steuergerät 11 gespeichert werden.

Obwohl bei der gezeigten Ausführungsform der RFID-Leser 12 als in dem Steuergerät 11 umfasst dargestellt ist, kann dieser auch von dem Steuergerät 11 separat vorgesehen sein und über eine geeignete Schnittstelle mit dem Steuergerät 11 verbunden werden. Dies ist sinnvoll, da der RFID-Leser 12 üblicherweise teuer ist und nur mit erhöhtem Aufwand in dem Steuergerät 11 zu integrieren ist. Da der RFID-Leser 12 jedoch nur zur Anfangsmontage bzw. beim Austausch des Steuergeräts 11 notwendig ist, da die aus den ausgelesenen Parameter ermittelten Korrekturwerte dauerhaft in dem Steuergerät 11 gespeichert werden, ist es ausreichend, dass der RFID-Leser nur dann an das Steuergerät 11 angeschlossen wird, wenn Parameter aus den RFID-Transpondern an den entsprechenden Sensoren 1 ausgelesen werden sollen. Sind die entsprechenden Parameter ausgelesen und die entsprechenden Korrekturwerte ermittelt, so kann der RFID-Leser von dem Steuergerät 11 entfernt werden und für die Montage eines weiteren Gesamtsystems verwendet werden.

Auch ein Austausch eines der Sensoren 1 in dem elektrischen Modul 10 ist somit in einfacher Weise durchzuführen, indem nach dem Austausch einer der Sensoren 1 ein Abgleich des Steuergeräts 11 erneut in oben beschriebener Weise gestartet wird. Dabei werden alle Parameter der Sensoren ausgelesen und die entsprechenden Korrekturwerte erneut berechnet und in dem Steuergerät 11 gespeichert.

Bei dem erfindungsgemäßen Gesamtsystem können damit alle aufwändigen Messverfahren entfallen, mit denen die Parameter der in dem elektrischen Modul verwendeten Sensoren nach dem Einbau in das elektrische Modul erfasst werden sollen, da die einzelnen genauen Parameter bereits zuvor z.B. beim Hersteller der Sensoren bestimmt und dem einzelnen Sensoren individuell durch die Verbindung mit dem RFID-Transponder zugeordnet werden.

Weiterhin können in erheblichem Maße Fehler bei der Montage und Inbetriebnahme der Steuergeräte für die elektrischen Module durch Verwechslung von Sensoren bzw. deren zugehörigen Parametern ausgeschlossen werden. Betreffen die Sensoren Temperatursensoren, so ist eine Verwendung von Temperaturschränken und/oder Temperaturtunneln für das Abgleichen der Temperaturmessung nicht notwendig. Somit kann die Prüfzeit bei einer Band-Ende-Prüfung der Steuergeräte erheblich reduziert werden, da keine Wartezeiten für die Temperierung der Sensoren in dem elektrischen Modul eingehalten werden müssen.

Anstelle des RFID-Transponders 2 als berührungslos auslesbares Element kann auch eine optische Sendeeinrichtung, ein optischer Transponder (Spiegel mit optischer Codierung) oder eine optisch auslesbare Codierung, z.B. in Form eines Barcodes oder 2D-Codes, an dem Sensor 1 angebracht sein. Anstelle des RFID-Lesers 12 wird dann (integriert in die Steuereinheit oder separat dazu) z.B. eine Laser-Ausleseeinheit vorgesehen, die in der Art eines Barcode-Lesers die optische Markierung erfasst und die Identifikationsinformation von dem Sensor 1 abliest.

Das Auslesen durch die Laser-Ausleseeinheit erfolgt entweder bei geöffnetem elektrischem Modul 10. Alternativ kann das elektrische Modul 10 auch mit einem ganz oder teilweise transparenten Gehäuse bzw. mit transparenten Fenstern aus für das Laserlicht durchlässigem Glas oder Kunststoff ausgebildet sein, wodurch das Auslesen der optisch auslesbaren Codierung erfolgt.

## Patentansprüche

1. Sensorvorrichtung mit einem Sensor (1) und mit einem berührungslos auslesbaren Element (2), das permanent an dem Sensor (1) befestigt ist, wobei das berührungslos auslesbare Element (2) ausgebildet ist, so dass ein sensorspezifischer Parameter des Sensors auslesbar ist.

2. Sensorvorrichtung nach Anspruch 1, wobei das berührungslos auslesbare Element (2) ausgebildet ist, so dass weiterhin eine Identifikationsnummer des Sensors (1) auslesbar ist.

3. Sensorvorrichtung nach Anspruch 1 oder 2, wobei der Sensor (1) ein Messwiderstand, einen Temperatursensor oder einen Induktivitäts-Strom-Sensor aufweist.

4. Sensorvorrichtung nach einem der Ansprüche 1 bis 3, wobei das berührungslos auslesbare Element (2) zumindest eines der folgenden Elemente aufweist: ein RFID-Tag, eine RFID-Karte, eine Funk-Sendeeinrichtung, eine optische Sendeeinrichtung, und eine optisch lesbare Codierung.

5. Elektrisches Modul (10) mit einem oder mehreren eingebauten Sensorvorrichtungen nach einem der vorangehenden Ansprüchen.

6. Elektrisches Modul (10) nach Anspruch 5, wobei der eine oder die mehreren Sensoren (1) der Sensorvorrichtungen elektrisch von außen kontaktierbar sind, um mit Hilfe der entsprechenden Sensoren (1) eine Messung vorzunehmen, und wobei das berührungslos auslesbare Element (2) jeder der entsprechenden Sensorvorrichtungen in einer Umgebung des elektrischen Moduls (10) auslesbar ist.

7. Steuergerät (11) zum Anschluss an ein elektrisches Modul (10) nach einem der Ansprüche 5 und 6, wobei das Steuergerät (11) mit den Sensorvorrichtungen des elektrisches Modul (10) verbindbar ist, wobei das Steuergerät (11) ausgebildet ist, um mit einer anschließbaren oder angeschlossenen Lesevorrichtung (12) zum Auslesen der berührungslos auslesbaren Elemente (2) der Sensorvorrichtungen jeweils den einen oder die mehreren sensorspezifischen Parameter jeder der Sensorvorrichtungen auszulesen und das Steuergerät (11) abhängig von den ausgelesenen sensorspezifischen Parametern abzugleichen.

8. Steuergerät (11) nach Anspruch 7, das ausgebildet ist, um das Abgleichen mit Hilfe von Korrekturwerten vorzunehmen, mit denen die von den Sensoren (1) der Sensorvorrichtungen erfassten Messwerte beaufschlagt werden, wobei das Steuergerät ausgebildet ist, um den Korrekturwert für den Messwert eines der Sensoren (1) entsprechend dem zugeordneten sensorspezifischen Parameter zu berechnen.

9. Steuergerät (11) nach Anspruch 7 oder 8 mit einer Schnittstelle zum Anschluss einer externen Lesevorrichtung (12) zum Auslesen der berührungslos auslesbaren Elemente (2) der Sensorvorrichtungen.

10. Gesamtsystem mit einem elektrischen Modul nach einem der Ansprüche 5 und 6 und mit einem Steuergerät nach einem der Ansprüche 7 bis 9.

11. Verfahren zum Abgleichen eines Steuergeräts (11) zu einem elektrischen Modul (10), das mindestens eine Sensorvorrichtung mit einem Sensor (1) und einem permanent an dem Sensor befestigten berührungslos auslesbaren Element (2) umfasst, mit folgenden Schritten:
- Auslesen des berührungslos auslesbaren Elementes (2) mit Hilfe eines Steuergeräts (11), um in dem Steuergerät (11) einen sensorspezifischen Parameter des Sensors zu erhalten,
- Abgleichen des Steuergeräts (11) abhängig von den ausgelesenen sensorspezifischen Parametern.
